# EUROPEAN PATENT SPECIFICATION

(11) **EP 3 346 759 B1**
(45) Date of publication and mention of the grant of the patent: **29.11.2023**
(21) Application number: 17305018.8
(22) Date of filing: 09.01.2017
(51) Int. Cl.: H04W 36/00, H04W 8/08

(54) **OPTIMIZATION OF GATEWAY RELOCATION IN A MOBILE SYSTEM**
OPTIMIERUNG VON GATEWAY-NEUPOSITIONIERUNGEN IN EINEM MOBILEN SYSTEM
OPTIMISATION DE LA RELOCALISATION DE PASSERELLE DANS UN SYSTÈME MOBILE

(43) Date of publication of application: 11.07.2018
(73) Proprietor: Nokia Technologies Oy, 02610 Espoo (FI)
(72) Inventor: LANDAIS, Bruno, 22304 LANNION (FR); STOECKLIN, William, 91620 NOZAY (FR); THIEBAUT, Laurent, 91620 NOZAY (FR); DREVON, Nicolas, 91620 NOZAY (FR)
(74) Representative: TBK

(56) References cited:
- WO-A1-2012/177023
- WO-A1-2016/053435
- "3rd Generation Partnership Project; Technical Specification Group Services and System Aspects; General Packet Radio Service (GPRS) enhancements for Evolved Universal Terrestrial Radio Access Network (E-UTRAN) access (Release 14)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.2.0, 16 December 2016 (2016-12-16), pages 1-385, XP051230002, [retrieved on 2016-12-16]
- TSG SA WG1: "Revised WID on Co-ordinated P-GW change for SIPTO (CSIPTO)", 3GPP DRAFT; SP-140509_REV, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG SA, no. Edinburgh, GB; 20140915 - 20140917 9 September 2014 (2014-09-09), XP050802159, Retrieved from the Internet: URL:http://www.3gpp.org/ftp/Meetings_3GPP_ SYNC/SA/Docs/ [retrieved on 2014-09-09]
- "3rd Generation Partnership Project; Technical Specification Group Services and System Aspects; Study on co-ordinated Packet data network GateWay (PGW) Change for Selected IP Traffic Offload (CSIPTO) (Release 13)", 3GPP STANDARD; 3GPP TR 22.828, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V13.0.0, 30 June 2014 (2014-06-30), pages 1-18, XP050774474, [retrieved on 2014-06-30]

## Description

The present invention generally relates to mobile communication networks and systems. More specifically, the present invention relates to a mobile core network and a method for optimization of gateway relocation in a mobile core network.

Detailed descriptions of mobile communication networks and systems can be found in the literature, such as in particular in Technical Specifications published by standardization bodies such as for example 3GPP (3^{rd} Generation Partnership Project).

In general, in a mobile system, a User Equipment (UE) has access to various services (such as IP services) in an external network (such as IP network) via a mobile network providing connectivity (such as IP connectivity). A mobile network generally comprises a Core Network accessed via an access network, such as a Radio Access Network. Procedures are defined in such networks and systems for managing (establishing, releasing, ...) the connectivity between the UE and a Gateway associated with the external network.

An example of mobile system is Evolved Packet System (EPS), also referred to as 4G system, specified in particular in 3GPP TS 23.401. In EPS, an external network is called Packet Data Network (PDN), a Gateway is called PDN Gateway (PGW), and connectivity between UE and PGW is represented by a PDN connection.

Another example of mobile system is Next Generation (Next Gen) system, also referred to as 5G system, current being specified by 3GPP, such as in 3GPP TR 23.799. In a Next Generation system, an external network is called Data Network (DN), a Gateway is split into two functions: control plane functions provided by a Session Management Function (SMF) and user plane functions provided by a User Plane Function (UPF), and connectivity between UE and Data Network via UPF is represented by a PDU session.

A function called Selected IP Traffic Offload (SIPTO) has been specified in particular in 3GPP TS 23.401. The SIPTO function enables an operator to offload certain types of traffic at a network node close to the UE's point of attachment to the access network.

As currently specified in clause 4.3.15 of 3GPP TS 23.401:
"For SIPTO above RAN, as a result of UE mobility (e.g. detected by the MME at TAU or SGSN at RAU or movement from GERAN), the target MME may wish to redirect a PDN connection towards a different GW that is more appropriate for the UE's current location, e.g. MME may know whether the UE's new location is served by the same GW as the old one. When the MME decides upon the need for GW relocation, the MME deactivates the impacted PDN connections indicating "reactivation requested" as specified in clause 5.10.3."

As currently specified in clause 5.10.3 of 3GPP TS 23.401:
"The UE requested PDN disconnection procedure is also used as part of the SIPTO function when the MME determines that GW relocation is desirable. In this situation the MME deactivates the PDN connection(s) relevant to SIPTO-allowed APN(s) using the "reactivation requested" cause value, and the UE should then re-establish those PDN connection(s).

It shall be possible to configure the MME to deactivate a PDN connection, for PDN GW relocation due to SIPTO above RAN, only when UE is in ECM-IDLE mode or during a Tracking Area Update procedure without established RAB(s)".

Following documents provide technological background:
"3rd Generation Partnership Project; Technical Specification Group Services and System Aspects; General Packet Radio Service (GPRS) enhancements for Evolved Universal Terrestrial Radio Access Network (E-UTRAN) access (Release 14)", 3GPP STANDARD; 3GPP TS 23.401, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, n° V14.2.0, 16 December 2016 (2016-12-16), pages 1-385, XP051230002,

TSG SA WG1: "Revised WID on Co-ordinated P-GW change for SIPTO (CSIPTO)", 3GPP DRAFT; SP-140509_REV, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. TSG SA, n° Edinburgh, GB, 20140915-20140917 9 September 2014 (2014-09-09), XP050802159.

As recognized by the inventors and as will be discussed later with more detail, there is a need, in particular with the introduction in EPS of a new feature called "Light Connection", to enhance a function such as the SIPTO function, such that a PDN connection can be deactivated not only when the UE is seen as in idle mode by the core network, but also (and without negative impact to the user's experience) when the UE is seen as in connected mode by the core network. More generally, there is a need to optimize functions such as Gateway relocation in such networks and systems.

Embodiments of the present invention in particular address such needs. Embodiments of the present invention apply not only to EPS (or 4G) systems, for which the SIPTO function is currently specified in particular in 3GPP TS 23.401, but also to other systems, such as in particular NextGen (or 5G) systems, in which a mode referred to as SSC mode 2 (including releasing an initial PDU session connectivity before setting up a new PDU session connectivity) is currently being specified.

As solution, the present invention provides subject-matter according to the independent claims, preferred embodiments thereof being defined in dependent claims.

Some embodiments of apparatus and/or methods in accordance with embodiments of the present invention are now described, by way of example only, and with reference to the accompanying drawings, in which:
- Figure 1 is intended to illustrate in a simplified way a first example of a sequence of flows according to embodiments of the invention,
- Figure 2 is intended to illustrate in a simplified way a second example of a sequence of flows according to embodiments of the invention,
- Figure 3 is intended to illustrate in a simplified way a third example of a sequence of flows according to embodiments of the invention,
- Figure 4 is intended to illustrate in a simplified way a fourth example of a sequence of flows according to embodiments of the invention.

### Abbreviations

- AMF: Access and Mobility Function
- EPS: Evolved Packet System
- MME: Mobility Management Entity
- PCRF: Policy and Charging Rules Function
- PCF: Policy Control Function
- PDN: Packet Data Network
- PGW: PDN Gateway
- SGSN: Serving GPRS Support Node
- SMF: Session Management Function
- SGW: Serving Gateway
- TDF: Traffic Detection Function
- UE: User Equipment
- UPF: User Plane Function

### Description of various aspects and/or embodiments of the invention

in the following, embodiments of the invention will be mainly described, by way of example only, for the case of EPS (4G) system. However, as indicated above, embodiments of the invention are not limited to such example. In particular, embodiments of the invention also apply to Next Generation (5G) system.

SIPTO (Selected IP Traffic Offload) enables an operator to offload certain types of traffic (e.g. Internet) at a network node (PGW) close to the UE's point of attachment to the access network. See 3GPP TS 23.401 subclause 4.3.15. Corresponding procedures have been specified in 3GPP for the MME/SGSN to select an SGW and PGW based on the current user location (e.g. Tracking Area Identity, Cell ID, eNB ID) and to re-allocate a different PGW upon UE's mobility.

Re-allocating a PGW implies, per existing procedures, to tear down the existing PDN connection between the UE and the PGW and to request the UE to re-establish a new PDN connection. As this entails a change of the IP address assigned to the UE and the potential loss of the on-going services of the UE, the MME/SGSN is required currently to re-allocate a PGW to the UE when the UE is in idle mode or performing a mobility procedure (without data radio bearers) such as a Tracking Area Update.

However today, smartphones can remain in connected mode (with data radio bearers) over a long period of time, e.g. due to the user's traffic pattern or due to the RAN maintaining the UE in connected mode (even if not necessarily always active) to minimize the number of transitions between the idle and connected mode (which are known to cause excessive signalling overhead in the EPS). Furthermore, 3GPP is standardizing a new Light Connection for LTE feature in Rel-14/Rel-15 (see RAN Work Item in RP-160540, "Signalling reduction to enable light connection for LTE), whereby an S1 signalling connection will be maintained between the eNB and the MME even for a UE that is in RRC idle or RRC suspended state, to minimize the network signalling overhead required for UE idle (or suspended) <> connected transitions. This feature is being designed such as when the MME has a S1 signalling connection for the UE, it remains unaware of whether the UE is RRC idle (or suspended) or RRC connected over the radio interface.

This makes the existing procedures to reallocate the PGW for UEs in idle mode inefficient and the situation is going to worsen a lot with the new Light Connection to LTE feature (where the MME might never be able to trigger a PGW relocation), This can result in PGWs remaining far to the UE's point of attachment, when the UE is moving, causing inefficient user path in the network and preventing to offload the user's traffic close to its point of attachment, as intended by the SIPTO feature.

The only solution that exists today is to relocate the PGW when the UE is seen as in IDLE mode by the Core Network, as specified in TS 23.401 clause 5.10.3: "This procedure is also used as part of the SIPTO function when the MME determines that GW relocation is desirable. In this situation the MME deactivates the PDN connection(s) relevant to SIPTO-allowed APN(s) using the "reactivation requested" cause value, and the UE should then re-establish those PDN connection(s). It shall be possible to configure the MME to deactivate a PDN connection, for PDN GW relocation due to SIPTO above RAN, only when UE is in ECM-IDLE mode or during a Tracking Area Update procedure without established RAB(s)".

An MME/SGSN is not aware on the traffic being exchanged on a PDN connection for a UE in connected mode. So the MME/SGSN cannot initiate currently a PDN disconnection for a UE in connected mode as this would result in breaking sensitive user application such as real-time communication (e.g. VoLTE calls), gaming, etc.

According to embodiments of the invention, the network shall be able to deactivate a PDN connection when the user is not currently using sensitive services (i.e. services that break when the IP address of the user is changed).

Specifically, embodiments of the invention include one or more of:
- when detecting the need to relocate a PGW (i.e. reallocate a different PGW) to a PDN connection), the MME/SGSN shall request the current PGW to initiate a PDN disconnection procedure when no sensitive user applications are going on within that PDN connection;
- the PGW, optionally under the control of the PCRF, or the TDF, monitors whether the user is running sensitive services, and initiates the procedure to release the PDN connection towards the UE (with a request to re-establish the PDN connection) when the UE stops using these services.

Embodiments of the invention allow the operator to control the trade off between the network efficiency and the end-user experience. The PGW or PCRF takes a policy decision based on service category usage, deferring any mitigation till users stop using sensitive applications like gaming or real-time communication.

Embodiments of the invention enhance the end-user experience:
- no explicit detach for UE connected to VoLTE and data
- No call loss
round-trip time improves browsing and streaming experience

According to embodiments of the invention, the network shall be able to deactivate a PDN connection when the user is not currently using "sensitive services" (i.e. services that break when the IP address of the user is changed).

Embodiments of the invention may include performing one or more of following steps:
1. Initial condition: A PDN connection is set-up. Services considered as "sensitive services" may be defined by operator's policies, e.g. in the PGW, PCRF or TDF. The PGW allocated in step 1 is noted PGW1.
2. The MME/SGSN may detect the need for reallocating a different PGW, such as PGW2, to a PDN connection, e.g. for SIPTO reasons, for a UE in connected mode (i.e. with an S1 signalling connection). This detection may take place during mobility procedures performed in connected mode, e.g. during a S1/lu handover procedure or an X2 handover procedure (i.e. MME receiving an S1 Path Switch Request), see subclause 5.5 of TS 23.401.
3. The MME/SGSN may request the PGW to initiate the release of the PDN connection when the user is not running sensitive services that should not be interrupted. This may be done e.g. by the MME/SGSN sending a GTP-C Modify Bearer Request to the PGW (via the SGW), with a new information element to request so.
4. The PGW, optionally under the control of the PCRF, or the TDF, under the control of the PCRF, may monitor the user traffic to detect whether the user is currently using sensitive services that should not be interrupted. When it is detected that the UE has stopped or is not using such sensitive services, the PGW may initiate the procedure to release the PDN connection as described in step 5.
   This step 4 may also be initiated by the PGW under other triggers than step 3 e.g. upon specific request from the PCRF.
5. When it is appropriate to do so based on the monitoring of the user's traffic, the PGW may initiate the procedure to release the PDN connection towards the UE (as specified in TS 23.401 subclause 5.4.4. 1), including a request to re-establish the PDN connection (i.e. it uses the cause "reactivation requested"). This may be done e.g. by the PGW sending a GTP-c Delete Bearer Request (indicating PDN connection deactivation, and re-activation requested). This is e.g. when the user is no longer using sensitive services (or applications) or e.g. upon expiry of an operator defined time period. When a TDF is used to monitor the user's traffic, the PCRF may instruct the PGW to initiate the release of the PDN connection with the cause "reactivation requested".
6. A PDN connection may then be established with PGW2.

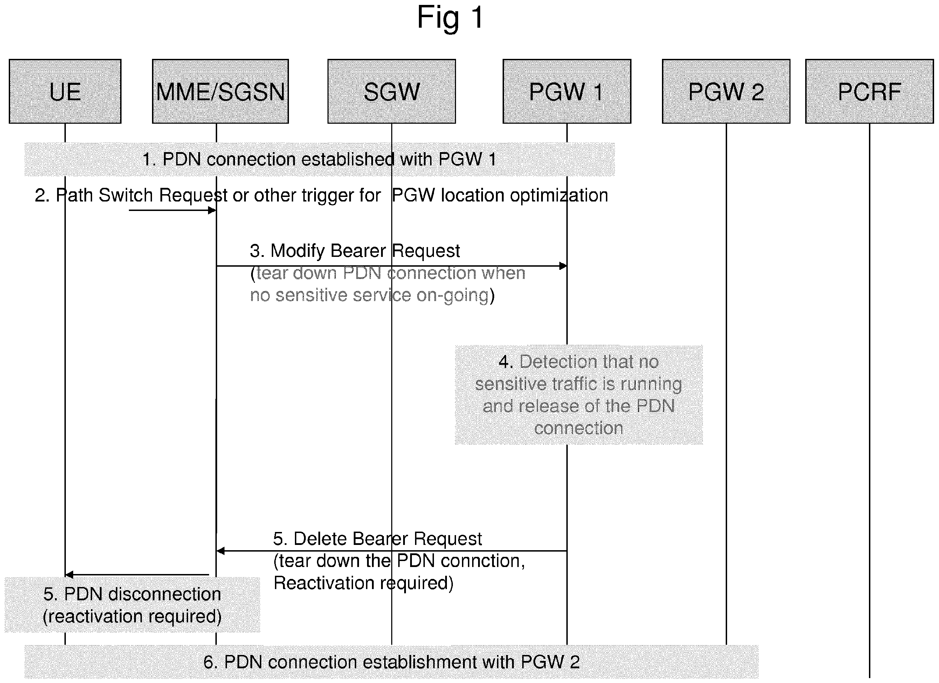

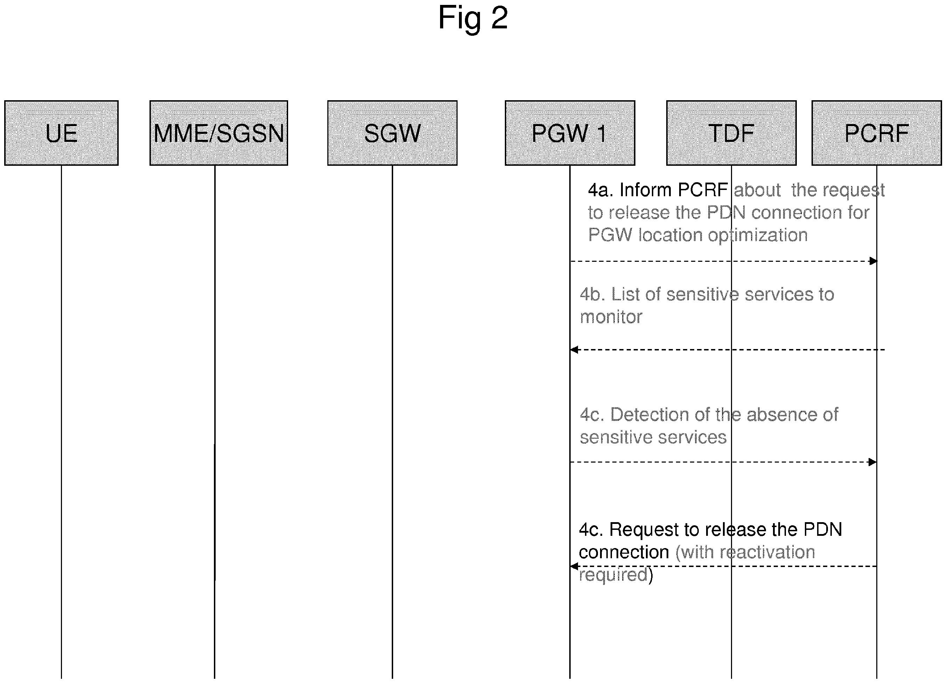

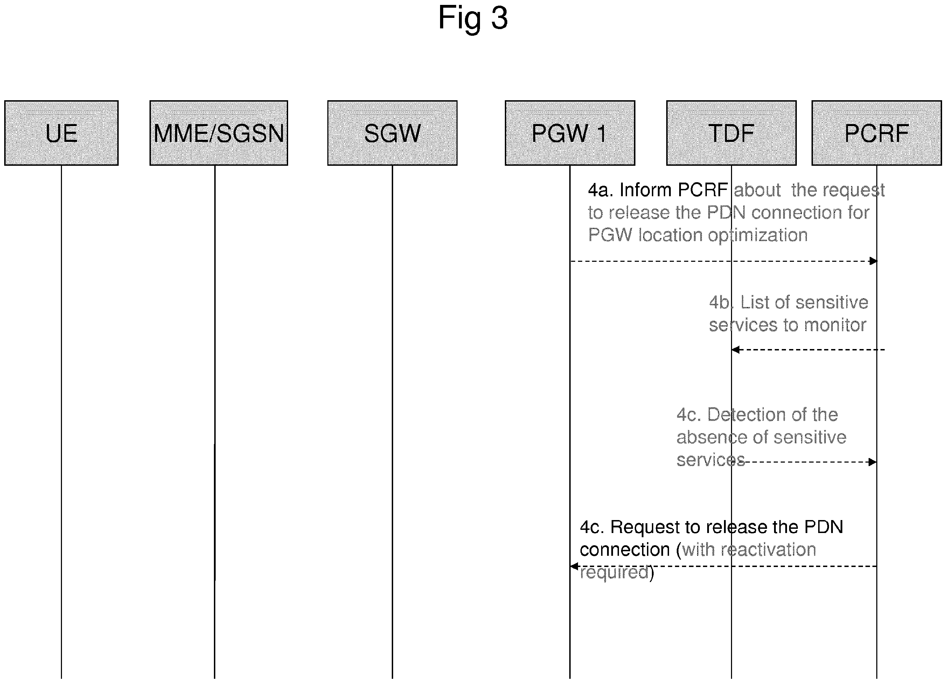

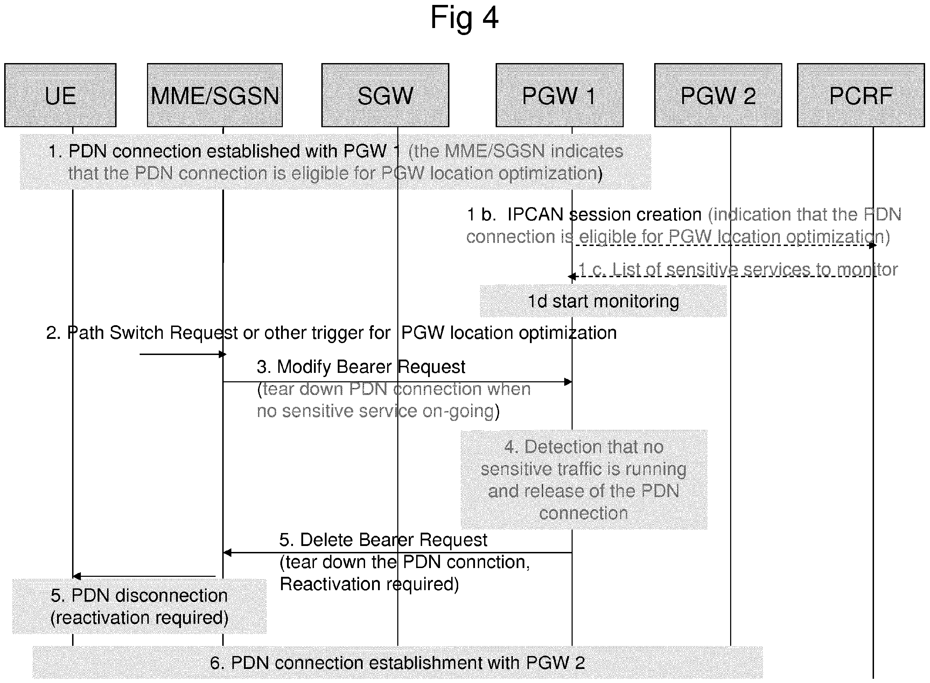

Example call flows are illustrated in figures 1 to 4:
These calls flows detail the steps 1-5 above in different deployments. The differences between the deployments correspond to various embodiments including various embodiments of step 4.:
a. There is no PCRF: the PGW may be configured with the list of sensitive services and react autonomously (an example is illustrated in Figure 1)
b. Upon reception of the MME/SGSN request, the PGW may notify the PCRF and the PCRF may ask the PGW to monitor the sensitive services (an example is illustrated in Figure 2)
c. Upon reception of the MME/SGSN request, the PGW may notify the PCRF and the PCRF may ask the TDF to monitor the sensitive services (an example is illustrated in Figure 3)
d. The PCRF may have provided the list of sensitive services to the PGW at PDN connection set-up (when the PDN connection is eligible to a release for PGW location optimization) and the PGW may monitor the sensitive services from the beginning of the PDU connection (an example is illustrated in Figure 4). This alternative assumes that the MME/SGSN has indicated to the PGW, during the establishment of the PDN connection, whether the PDU connection may be eligible to a release for PGW location optimization e.g. with SIPTO.

NOTE: In the drawings the SGW is omitted to make the drawings simpler but the interactions between PGW and MME/SGSN take place via the SGW.

NOTE: Only Figures 1 and 4 show the overall procedure. The other call flows (2 and 3) show only the different embodiments of step 4

NOTE: When the UE uses a light connection for LTE, the PGW or TDF will detect that no user's traffic at all is currently being exchanged with the UE (but the MME/SGSN is not aware of that).

As already indicated, the examples described above correspond by way of example to the case of EPC (4G Core Network). In case of 5GC (5G Core):
- The notion of PDN connection would be replaced by the equivalent notion of PDU session
- The step 3 may correspond to SMF (the Session Manager, entity playing a similar role than a PGW Control Plane) receiving a notification (of mobility of the UE) that has been initiated by AMF (Access and Mobility Management, entity playing a similar role than the MME)
- The UPF takes a similar role to the User Plane of the PGW (traffic detection upon SMF control)
- The AMF does not send an explicit request to initiate the release of an established PDU session for a UE when no service that breaks at IP address change of the UE, referred to as sensitive service, is on-going on said PDU session; instead it sends a notification of UE mobility to SMF and the SMF deduces the need to initiate the release of an established PDU session when no service that breaks at IP address change of the UE, referred to as sensitive service, is on-going on this PDU session
- The Step 4 may correspond to the SMF initiating procedures related with SSC mode 2 (release the initial PDU session connectivity before setting up a new PDU session connectivity).
- When the PDU session corresponds to a unique connectivity (IP address / IPv6 prefix, ...) the step 5 may correspond to a NAS SM signalling sent directly by the SMF to the UE (with AMF acting as transparent relay): Step 5 above becomes "When it is appropriate to do so based on the monitoring of the user's traffic, the SMF may initiate the procedure to release the PDN connection towards the UE. This corresponds to the SMF sending a PDU session release request to the UE via the AMF.
- When the PDU session corresponds to an IPv6 multi-homing a PDU session and thus with multiple IPv6 anchor points, the detection of the absence of sensitive traffic and the corresponding release of the IPv6 connectivity may take place on an IPv6 prefix basis.
- The indication that said connectivity (a PDU session) is eligible for Gateway relocation optimization is received by SMF from the UE itself or from UDM (User subscription Database),

A person of skill in the art would readily recognize that steps of various above-described methods can be performed by programmed computers. Herein, the disclosure relates also to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media.

## Claims

1. A mobile core network including a mobile core network entity providing access and mobility management functions and a mobile core network entity providing gateway control plane functions, wherein:
- the mobile core network entity providing access and mobility management functions is configured to send a request to initiate the release of an established connectivity for a user equipment when no service that is interrupted at internet protocol address change of the user equipment, referred to as sensitive service, is on-going on said established connectivity, wherein said request is sent upon detection of a need for gateway relocation optimization, said gateway relocation optimization including said initiation of the release of said established connectivity when no sensitive service is on-going,
- the mobile core network entity providing gateway control plane functions is configured to receive said request,
- the mobile core network entity providing gateway control plane functions is configured to, after receiving said request, monitor the user plane traffic over said established connectivity to detect the absence of on-going sensitive service, and to initiate the release of said established connectivity before re-establishing a connectivity, for the user equipment, when absence of on-going sensitive service is detected,
wherein the established connectivity is a PDN connection, the mobility core network entity providing access and mobility management functions is an MME/SGSN and the mobility core network entity providing gateway control plane functions is a PGW, or
wherein the established connectivity is a PDU session, the mobility core network entity providing access and mobility management functions is an AMF and the mobility core network entity providing gateway control plane functions is an SMF.

2. A mobile core network according to claim 1, wherein the mobile core network entity providing access and mobility management functions is configured to:
- detect the need for gateway relocation optimization upon detection of a mobility event for said user equipment in a connected mode as seen from the mobile core network.

3. A mobile core network according to claim 1 or 2, wherein the established connectivity is a PDN connection, the mobility core network entity providing access and mobility management functions is an MME/SGSN and the mobility core network entity providing gateway control plane functions is a PGW, and wherein U said mobile core network entity providing gateway control plane functions is configured to perform, upon reception of said request:
- detect absence of on-going sensitive service on said established connectivity, based on a list of sensitive services configured in said mobile core network entity.

4. A mobile core network according to any of claims 1 to 3, wherein the established connectivity is a PDN connection, the mobility core network entity providing access and mobility management functions is an MME/SGSN and the mobility core network entity providing gateway control plane functions is a PGW, and wherein said mobile core network entity providing gateway control plane functions is configured to perform, upon reception of said request:
- inform a mobile core network entity providing policy control functions of said request, wherein the mobile core network entity providing policy control functions is a PCRF,
- receive from said mobile core network entity providing policy control functions a list of sensitive services to monitor, to detect absence of on-going sensitive service,
- monitor the user plane traffic over said established connectivity for detecting the absence of on-going sensitive service,
- inform the mobile core network entity providing policy control functions of a detected absence of on-going sensitive service,
- receive a request from said mobile core network entity providing policy control functions to release said established connectivity.

5. A method for optimization of gateway relocation in a mobile core network including a mobile core network entity providing access and mobility management functions and a mobile core network entity providing gateway control plane functions, said method comprising:
- the mobile core network entity providing access and mobility management functions sends a request to initiate the release of an established connectivity for a user equipment when no service that is interrupted at internet protocol address change of the user equipment, referred to as sensitive service, is on-going on said established connectivity, wherein said request is sent upon detection of a need for gateway relocation optimization, said gateway relocation optimization including said initiation of the release of said established connectivity when no sensitive service is on-going,
- the mobile core network entity providing gateway control plane functions receives said request,
- the mobile core network entity providing gateway control plane functions, after receiving said request, monitors the user plane traffic over said established connectivity to detect the absence of on-going sensitive service, and initiates the release of said established connectivity before re-establishing a connectivity, for the user equipment, when absence of on-going sensitive service is detected,
wherein the established connectivity is a PDN connection, the mobility core network entity providing access and mobility management functions is an MME/SGSN and the mobility core network entity providing gateway control plane functions is a PGW,
or wherein the established connectivity is a PDU session, the mobility core network entity providing access and mobility management functions is an AMF and the mobility core network entity providing gateway control plane functions is an SMF.

6. A method according to claim 5, wherein the mobile core network entity providing access and mobility management functions performs:
- detecting the need for gateway relocation optimization upon detection of a mobility event for said user equipment in a connected mode as seen from the mobile core network.

7. A method according to claim 5 or 6, wherein the established connectivity is a PDN connection, the mobility core network entity providing access and mobility management functions is an MME/SGSN and the mobility core network entity providing gateway control plane functions is a PGW, and wherein said mobile core network entity providing gateway control plane functions performs, upon reception of said request:
- detecting absence of on-going sensitive service on said established connectivity, based on a list of sensitive services configured in said mobile core network entity.

8. A method according to any of claims 5 to 7, wherein the established connectivity is a PDN connection, the mobility core network entity providing access and mobility management functions is an MME/SGSN and the mobility core network entity providing gateway control plane functions is a PGW, and wherein said mobile core network entity providing gateway control plane functions performs, upon reception of said request:
- informing a mobile core network entity providing policy control functions, of said request, wherein the mobile core entity providing policy control functions is a PCRF,
- receiving from said mobile core network entity providing policy control functions a list of sensitive services to monitor, to detect absence of on-going sensitive service,
- monitoring the user plane traffic over said established connectivity for detecting the absence of on-going sensitive service,
- informing the mobile core network entity providing policy control functions of a detected absence of on-going sensitive service,
- receiving a request from said mobile core network entity providing policy control functions to release said established connectivity.

## Patentansprüche

1. Mobiles Kernnetzwerk, das eine mobile Kernnetzwerkentität, die Zugangs- und Mobilitätsverwaltungsfunktionen bereitstellt, und eine mobile Kernnetzwerkentität, die Gatewaysteuerebenenfunktionen bereitstellt, beinhaltet, wobei:
- die mobile Kernnetzwerkentität, die Zugangs- und Mobilitätsverwaltungsfunktionen bereitstellt, dazu ausgelegt ist, eine Anforderung zu senden, um die Trennung einer eingerichteten Konnektivität für eine Teilnehmereinrichtung zu initiieren, wenn auf der eingerichteten Konnektivität kein Dienst kontinuierlich ist, der bei einer Internetprotokolladressänderung der Teilnehmereinrichtung, der als sensitiver Dienst bezeichnet wird, unterbrochen wird, wobei die Anforderung nach Detektion einer Notwendigkeit einer Gatewayneupositionierungsoptimierung gesendet wird, wobei die Gatewayneupositionierungsoptimierung die Initiierung der Trennung der eingerichteten Konnektivität beinhaltet, wenn kein sensitiver Dienst kontinuierlich ist,
- die mobile Kernnetzwerkentität, die Gatewaysteuerebenenfunktionen bereitstellt, dazu ausgelegt ist, die Anforderung zu empfangen,
- die mobile Kernnetzwerkentität, die Gatewaysteuerebenenfunktionen bereitstellt, dazu ausgelegt ist, nach Empfangen der Anforderung den Benutzerebenenverkehr über die eingerichtete Konnektivität zu überwachen, um das Fehlen eines kontinuierlichen sensitiven Dienstes zu detektieren, und die Trennung der eingerichteten Konnektivität zu initiieren, bevor eine Konnektivität für die Teilnehmereinrichtung neu eingerichtet wird, wenn ein Fehlen eines kontinuierlichen sensitiven Dienstes detektiert wird,
wobei die eingerichtete Konnektivität eine PDN-Verbindung ist, die Mobilitätskernnetzwerkentität, die Zugangs- und Mobilitätsverwaltungsfunktionen bereitstellt, eine MME bzw. ein SGSN ist und die Mobilitätskernnetzwerkentität, die Gatewaysteuerebenenfunktionen bereitstellt, ein PGW ist, oder
wobei die eingerichtete Konnektivität eine PDU-Sitzung ist, die Mobilitätskernnetzwerkentität, die Zugangs- und Mobilitätsverwaltungsfunktionen bereitstellt, eine AMF ist und die Mobilitätskernnetzwerkentität, die Gatewaysteuerebenenfunktionen bereitstellt, eine SMF ist.

2. Mobiles Kernnetzwerk nach Anspruch 1, wobei die mobile Kernnetzwerkentität, die Zugangs- und Mobilitätsverwaltungsfunktionen bereitstellt, zu Folgendem ausgelegt ist:
- nach Detektion eines Mobilitätsereignisses Detektieren der Notwendigkeit einer Gatewayneupositionierungsoptimierung für die Teilnehmereinrichtung in einem verbundenen Modus, wie vom mobilen Kernnetzwerk aus gesehen.

3. Mobiles Kernnetzwerk nach Anspruch 1 oder 2, wobei die eingerichtete Konnektivität eine PDN-Verbindung ist, die Mobilitätskernnetzwerkentität, die Zugangs- und Mobilitätsverwaltungsfunktionen bereitstellt, eine MME bzw. ein SGSN ist und die Mobilitätskernnetzwerkentität, die Gatewaysteuerebenenfunktionen bereitstellt, ein PGW ist, und wobei
die mobile Kernnetzwerkentität, die Gatewaysteuerebenenfunktionen bereitstellt, dazu ausgelegt ist, nach Empfang der Anforderung Folgendes durchzuführen:
- Detektieren eines Fehlens eines kontinuierlichen sensitiven Dienstes auf der eingerichteten Konnektivität auf Basis einer Liste von sensitiven Diensten, die in der mobilen Kernnetzwerkentität ausgelegt ist.

4. Mobiles Kernnetzwerk nach einem der Ansprüche 1 bis 3, wobei die eingerichtete Konnektivität eine PDN-Verbindung ist, die Mobilitätskernnetzwerkentität, die Zugangs- und Mobilitätsverwaltungsfunktionen bereitstellt, eine MME bzw. ein SGSN ist und die Mobilitätskernnetzwerkentität, die Gatewaysteuerebenenfunktionen bereitstellt, ein PGW ist, und wobei
die mobile Kernnetzwerkentität, die Gatewaysteuerebenenfunktionen bereitstellt, dazu ausgelegt ist, nach Empfang der Anforderung Folgendes durchzuführen:
- Informieren einer mobilen Kernnetzwerkentität, die Richtliniensteuerfunktionen bereitstellt, über die Anforderung, wobei die mobile Kernnetzwerkentität, die Richtliniensteuerfunktion bereitstellt, eine PCRF ist,
- Empfangen einer Liste von zu überwachenden sensitiven Diensten von der mobilen Kernnetzwerkentität, die Richtliniensteuerfunktionen bereitstellt, um ein Fehlen eines kontinuierlichen sensitiven Dienstes zu detektieren,
- Überwachen des Benutzerebenenverkehrs über die eingerichtete Konnektivität zum Detektieren des Fehlens eines kontinuierlichen sensitiven Dienstes,
- Informieren der mobilen Kernnetzwerkentität, die Richtliniensteuerfunktionen bereitstellt, über ein detektiertes Fehlen eines kontinuierlichen sensitiven Dienstes,
- Empfangen einer Anforderung zum Trennen der eingerichteten Konnektivität von der mobilen Kernnetzwerkentität, die Richtliniensteuerfunktionen bereitstellt.

5. Verfahren zum Optimieren einer Gatewayneupositionierung in einem mobilen Kernnetzwerk, das eine mobile Kernnetzwerkentität, die Zugangs- und Mobilitätsverwaltungsfunktionen bereitstellt, und eine mobile Kernnetzwerkentität, die Gatewaysteuerebenenfunktionen bereitstellt, beinhaltet, wobei das Verfahren Folgendes umfasst:
- die mobile Kernnetzwerkentität, die Zugangs- und Mobilitätsverwaltungsfunktionen bereitstellt, sendet eine Anforderung, um die Trennung einer eingerichteten Konnektivität für eine Teilnehmereinrichtung zu initiieren, wenn auf der eingerichteten Konnektivität kein Dienst kontinuierlich ist, der bei einer Internetprotokolladressänderung der Teilnehmereinrichtung, der als sensitiver Dienst bezeichnet wird, unterbrochen wird, wobei die Anforderung nach Detektion einer Notwendigkeit einer Gatewayneupositionierungsoptimierung gesendet wird, wobei die Gatewayneupositionierungsoptimierung die Initiierung der Trennung der eingerichteten Konnektivität beinhaltet, wenn kein sensitiver Dienst kontinuierlich ist,
- die mobile Kernnetzwerkentität, die Gatewaysteuerebenenfunktionen bereitstellt, empfängt die Anforderung,
- die mobile Kernnetzwerkentität, die Gatewaysteuerebenenfunktionen bereitstellt, überwacht nach Empfangen der Anforderung den Benutzerebenenverkehr über die eingerichtete Konnektivität, um das Fehlen eines kontinuierlichen sensitiven Dienstes zu detektieren, und initiiert die Trennung der eingerichteten Konnektivität, bevor eine Konnektivität für die Teilnehmereinrichtung neu eingerichtet wird, wenn ein Fehlen eines kontinuierlichen sensitiven Dienstes detektiert wird,
wobei die eingerichtete Konnektivität eine PDN-Verbindung ist, die Mobilitätskernnetzwerkentität, die Zugangs- und Mobilitätsverwaltungsfunktionen bereitstellt, eine MME bzw. ein SGSN ist und die Mobilitätskernnetzwerkentität, die Gatewaysteuerebenenfunktionen bereitstellt, ein PGW ist,
oder wobei die eingerichtete Konnektivität eine PDU-Sitzung ist, die Mobilitätskernnetzwerkentität, die Zugangs- und Mobilitätsverwaltungsfunktionen bereitstellt, eine AMF ist und die Mobilitätskernnetzwerkentität, die Gatewaysteuerebenenfunktionen bereitstellt, eine SMF ist.

6. Verfahren nach Anspruch 5, wobei die mobile Kernnetzwerkentität, die Zugangs- und Mobilitätsverwaltungsfunktionen bereitstellt, Folgendes durchführt:
- nach Detektion eines Mobilitätsereignisses Detektieren der Notwendigkeit einer Gatewayneupositionierungsoptimierung für die Teilnehmereinrichtung in einem verbundenen Modus, wie vom mobilen Kernnetzwerk aus gesehen.

7. Verfahren nach Anspruch 5 oder 6, wobei die eingerichtete Konnektivität eine PDN-Verbindung ist, die Mobilitätskernnetzwerkentität, die Zugangs- und Mobilitätsverwaltungsfunktionen bereitstellt, eine MME bzw. ein SGSN ist und die Mobilitätskernnetzwerkentität, die Gatewaysteuerebenenfunktionen bereitstellt, ein PGW ist, und wobei
die mobile Kernnetzwerkentität, die Gatewaysteuerebenenfunktionen bereitstellt, nach Empfang der Anforderung Folgendes durchführt:
- Detektieren eines Fehlens eines kontinuierlichen sensitiven Dienstes auf der eingerichteten Konnektivität auf Basis einer Liste von sensitiven Diensten, die in der mobilen Kernnetzwerkentität ausgelegt ist.

8. Verfahren nach einem der Ansprüche 5 bis 7, wobei die eingerichtete Konnektivität eine PDN-Verbindung ist, die Mobilitätskernnetzwerkentität, die Zugangs- und Mobilitätsverwaltungsfunktionen bereitstellt, eine MME bzw. ein SGSN ist und die Mobilitätskernnetzwerkentität, die Gatewaysteuerebenenfunktionen bereitstellt, ein PGW ist, und wobei
die mobile Kernnetzwerkentität, die Gatewaysteuerebenenfunktionen bereitstellt, nach Empfang der Anforderung Folgendes durchführt:
- Informieren einer mobilen Kernnetzwerkentität, die Richtliniensteuerfunktionen bereitstellt, über die Anforderung, wobei die mobile Kernnetzwerkentität, die Richtliniensteuerfunktionen bereitstellt, eine PCRF ist,
- Empfangen einer Liste von zu überwachenden sensitiven Diensten von der mobilen Kernnetzwerkentität, die Richtliniensteuerfunktionen bereitstellt, um ein Fehlen eines kontinuierlichen sensitiven Dienstes zu detektieren,
- Überwachen des Benutzerebenenverkehrs über die eingerichtete Konnektivität zum Detektieren des Fehlens eines kontinuierlichen sensitiven Dienstes,
- Informieren der mobilen Kernnetzwerkentität, die Richtliniensteuerfunktionen bereitstellt, über ein detektiertes Fehlen eines kontinuierlichen sensitiven Dienstes,
- Empfangen einer Anforderung zum Trennen der eingerichteten Konnektivität von der mobilen Kernnetzwerkentität, die Richtliniensteuerfunktionen bereitstellt.

## Revendications

1. Réseau central mobile comportant une entité de réseau central mobile fournissant des fonctions de gestion de l'accès et de la mobilité et une entité de réseau central mobile fournissant des fonctions de plan de contrôle de passerelle, dans lequel :
- l'entité de réseau central mobile fournissant des fonctions de gestion de l'accès et de la mobilité est configurée pour envoyer une demande d'initier la libération d'une connectivité établie pour un équipement utilisateur lorsqu'aucun service, qui est interrompu lors d'un changement d'adresse de protocole internet de l'équipement utilisateur, appelé service sensible, n'est en cours sur ladite connectivité établie, dans lequel ladite demande est envoyée à la détection de la nécessité d'une optimisation de relocalisation de passerelle, ladite optimisation de relocalisation de passerelle comportant ladite initiation de la libération de ladite connectivité établie lorsqu'aucun service sensible n'est en cours,
- l'entité de réseau central mobile fournissant des fonctions de plan de contrôle de passerelle est configurée pour recevoir ladite demande,
- l'entité de réseau central mobile fournissant des fonctions de plan de contrôle de passerelle est configurée, après la réception de ladite demande, pour surveiller le trafic de plan utilisateur sur ladite connectivité établie afin de détecter l'absence d'un service sensible en cours, et pour initier la libération de ladite connectivité établie avant de rétablir une connectivité, pour l'équipement utilisateur, lorsque l'absence d'un service sensible en cours est détectée,
dans lequel la connectivité établie est une connexion PDN, l'entité de réseau central de mobilité fournissant des fonctions de gestion de l'accès et de la mobilité est un(e) MME/SGSN et l'entité de réseau central de mobilité fournissant des fonctions de plan de contrôle de passerelle est un PGW, ou
dans lequel la connectivité établie est une session PDU, l'entité de réseau central de mobilité fournissant des fonctions de gestion de l'accès et de la mobilité est une AMF et l'entité de réseau central de mobilité fournissant des fonctions de plan de contrôle de passerelle est une SMF.

2. Réseau central mobile selon la revendication 1, dans lequel l'entité de réseau central mobile fournissant des fonctions de gestion de l'accès et de la mobilité est configurée pour :
- détecter la nécessité d'une optimisation de relocalisation de passerelle à la détection d'un événement de mobilité pour ledit équipement utilisateur en mode connecté tel qu'il est vu depuis le réseau central mobile.

3. Réseau central mobile selon la revendication 1 ou 2, dans lequel la connectivité établie est une connexion PDN, l'entité de réseau central de mobilité fournissant des fonctions de gestion de l'accès et de la mobilité est un(e) MME/SGSN et l'entité de réseau central de mobilité fournissant des fonctions de plan de contrôle de passerelle est un PGW, et dans lequel ladite entité de réseau central mobile fournissant des fonctions de plan de contrôle de passerelle est configurée pour réaliser, à la réception de ladite demande :
- la détection de l'absence de service sensible en cours sur ladite connectivité établie, sur la base d'une liste de services sensibles configurés dans ladite entité de réseau central mobile.

4. Réseau central mobile selon l'une des revendications 1 à 3, dans lequel
la connectivité établie est une connexion PDN, l'entité de réseau central de mobilité fournissant des fonctions de gestion de l'accès et de la mobilité est un(e) MME/SGSN et l'entité de réseau central de mobilité fournissant des fonctions de plan de contrôle de passerelle est un PGW, et dans lequel ladite entité de réseau central mobile fournissant des fonctions de plan de contrôle de passerelle est configurée pour réaliser, à la réception de ladite demande, les étapes suivantes :
- informer une entité de réseau central mobile fournissant des fonctions de contrôle de politique de ladite demande, dans lequel l'entité de réseau central mobile fournissant des fonctions de contrôle de politique est une PCRF,
- recevoir, de ladite entité de réseau central mobile fournissant des fonctions de contrôle de politique, une liste de services sensibles à surveiller, afin de détecter l'absence d'un service sensible en cours,
- surveiller le trafic de plan utilisateur sur ladite connectivité établie pour détecter l'absence de service sensible en cours,
- informer l'entité de réseau central mobile fournissant des fonctions de contrôle de politique de la détection de l'absence d'un service sensible en cours,
- recevoir une demande de ladite entité de réseau central mobile fournissant des fonctions de contrôle de politique de libérer ladite connectivité établie.

5. Procédé d'optimisation de la relocalisation de passerelle dans un réseau central mobile comportant une entité de réseau central mobile fournissant des fonctions de gestion de l'accès et de la mobilité et une entité de réseau central mobile fournissant des fonctions de plan de contrôle de passerelle, ledit procédé comprenant les étapes suivantes :
- l'entité de réseau central mobile fournissant des fonctions de gestion de l'accès et de la mobilité envoie une demande d'initier la libération d'une connectivité établie pour un équipement utilisateur lorsqu'aucun service, qui est interrompu lors d'un changement d'adresse de protocole internet de l'équipement utilisateur, appelé service sensible, n'est en cours sur ladite connectivité établie, dans lequel ladite demande est envoyée à la détection de la nécessité d'une optimisation de relocalisation de passerelle, ladite optimisation de relocalisation de passerelle comportant ladite initiation de la libération de ladite connectivité établie lorsqu'aucun service sensible n'est en cours,
- l'entité de réseau central mobile fournissant des fonctions de plan de contrôle de passerelle reçoit ladite demande,
- l'entité de réseau central mobile fournissant des fonctions de plan de contrôle de passerelle, après la réception de ladite demande, surveille le trafic de plan utilisateur sur ladite connectivité établie afin de détecter l'absence d'un service sensible en cours, et initie la libération de ladite connectivité établie avant de rétablir une connectivité, pour l'équipement utilisateur, lorsque l'absence d'un service sensible en cours est détectée,
dans lequel la connectivité établie est une connexion PDN, l'entité de réseau central de mobilité fournissant des fonctions de gestion de l'accès et de la mobilité est un(e) MME/SGSN et l'entité de réseau central de mobilité fournissant des fonctions de plan de contrôle de passerelle est un PGW, ou dans lequel la connectivité établie est une session PDU, l'entité de réseau central de mobilité fournissant des fonctions de gestion de l'accès et de la mobilité est une AMF et l'entité de réseau central de mobilité fournissant des fonctions de plan de contrôle de passerelle est une SMF.

6. Procédé selon la revendication 5, dans lequel l'entité de réseau central mobile fournissant des fonctions de gestion de l'accès et de la mobilité réalise :
- la détection de la nécessité d'une optimisation de relocalisation de passerelle à la détection d'un événement de mobilité pour ledit équipement utilisateur en mode connecté tel qu'il est vu depuis le réseau central mobile.

7. Procédé selon la revendication 5 ou 6, dans lequel la connectivité établie est une connexion PDN, l'entité de réseau central de mobilité fournissant des fonctions de gestion de l'accès et de la mobilité est un(e) MME/SGSN et l'entité de réseau central de mobilité fournissant des fonctions de plan de contrôle de passerelle est un PGW, et dans lequel ladite entité de réseau central mobile fournissant des fonctions de plan de contrôle de passerelle réalise, à la réception de ladite demande :
- la détection de l'absence de service sensible en cours sur ladite connectivité établie, sur la base d'une liste de services sensibles configurés dans ladite entité de réseau central mobile.

8. Procédé selon l'une des revendications 5 à 7, dans lequel la connectivité établie est une connexion PDN, l'entité de réseau central de mobilité fournissant des fonctions de gestion de l'accès et de la mobilité est un(e) MME/SGSN et l'entité de réseau central de mobilité fournissant des fonctions de plan de contrôle de passerelle est un PGW, et dans lequel ladite entité de réseau central mobile fournissant des fonctions de plan de contrôle de passerelle réalise, à la réception de ladite demande les étapes suivantes :
- informer une entité de réseau central mobile fournissant des fonctions de contrôle de politique de ladite demande, dans lequel l'entité de réseau central mobile fournissant des fonctions de contrôle de politique est une PCRF,
- recevoir, de ladite entité de réseau central mobile fournissant des fonctions de contrôle de politique, une liste de services sensibles à surveiller, afin de détecter l'absence d'un service sensible en cours,
- surveiller le trafic de plan utilisateur sur ladite connectivité établie pour détecter l'absence de service sensible en cours,
- informer l'entité de réseau central mobile fournissant des fonctions de contrôle de politique de la détection de l'absence d'un service sensible en cours,
- recevoir une demande de ladite entité de réseau central mobile fournissant des fonctions de contrôle de politique de libérer ladite connectivité établie.
